# EUROPEAN PATENT APPLICATION

(11) **EP 1 329 441 A1**
(43) Date of publication of application: **23.07.2003**
(21) Application number: 03425009.2
(22) Date of filing: 13.01.2003
(51) Int. Cl.: C05D 9/02, A01N 59/20

(54) **Plant nutrient compositions comprising gluconates and process of obtaining thereof**

(30) Priority: 21.01.2002 IT LT20020003
(71) Applicant: Terenzio, Domenico, 04022 Fondi (IT)
(72) Inventor: Terenzio, Domenico, 04022 Fondi (IT)

(57) **Abstract**

This invention for which an European patent is requested is applying to the Sections of Plant Nutrition and Defence against fungus and/or bacterial adversities.

Nutritional and defence techniques currently in use create a great loss of nutritional elements and of active substances. The new technology outlined in this invention, permits us to aim our attempts, with a substantial saving of products used to the advantage of the environment, the ecosystem and hence to man's health. This innovative and unique method has been refined after years of in-depth research and field testing, on a vast range of agronomical cultivations, to improve and to counterbalance the nutrition of the Plants which permits us, at the same time to increase the resistance of these same plants for a cryptic adjustment (that is hidden), that is present at the molecular level, as the plant is strongly stimulated to synthesize substance called FITOALEXINE. This biological resistance mechanism of the plants, is introduced by the administration of a nutritional preparation called GLUCONATE, that is the Gluconic Acid salts. Therefore, we have all the nutritional elements for the cultivation (Macro,Micro,Mesoelements), the Amino Acids, the Catalysts, the Phytoregulators, Vegetable Extracts, etc...., as GLUCONATES.

The GLUCONATES, represent, however, highly specialized products for an intelligent balanced plant nutrition, which, permits us to reduce the adding of nutritional elements for a total preservation of nutritional substances (in which, the elements are completely "Chelate", that is protected by the Gluconic Acid molecule) due to negative pedo-climatic factors.

In function with the components that we will combine with the Gluconic Acid, we have the GLUCONATE of NITROGEN (eliminating the Nitrates, well-known for their high toxicity towards the environment and man) Phosphorus, Potassium, Magnesium, Calcium, Iron, Manganese, Boron, Molybdenum, Copper (which can, surely, substitute Copper Oxichlorides, Hydroxides, Sulphate Carbonate for the defence of the plants, allowing a reduction of a least 90% of Metal Copper in the environment, with distinctly superior Phytosanitary results) of Sodium, Zinc, Ammonium, Algae, Phytoregulators, etc..........................

## Description

The long research and the subsequent testing carried out at all levels and in a vast range of geographical areas on GLUCONATES (proprietary medicines used to give nutritional elements to people who are particularly weak or are in health conditions that require the largest and best availability of nutritional substances (pregnancy, pathological state induced by critical clinical pathologies), **absolute innovation** (never mentioned in any text on Chemical Agriculture and/or scientific documentation for the nutrition and/or vegetable defence) for which I request the European patent, it has demonstrated that the nutritional components administered to the plants as GLUCONATES, represent the formulation that permits us to obtain the best Technical-Agronomical results, so summarized:
**1. A HIGH LEVEL OF PLANT ASSIMILATION;**
**2. REDUCED ASSIMILATION TIME;**
3. **REDUCED ADDITION OF NUTRITIONAL ELEMENTS TO THE CULTIVATION;**
**4. NO LOSS OF PRODUCT ADMINISTERED;**
**5. SAVING;**
**6. REDUCTION OF POLLUTION BY AT LEAST 90%.**

The nutrition of components administered to the plants as GLUCONATES, become systematical, in which, Gluconic Acid stimulates the absorption of the component or the substances with which it is bound, penetrating the lymphatic system very rapidly (from 2 to 4 hours), through the foliage system, the radical system and through the cortex.

Through numerous research and testing I have carried out, I have noticed that the COPPER GLUCONATE (with a percentage in Cu Metal of 5-6%) allowed me to have healthy plants free form fungus and bacterial attacks, administering it to the plant every 9-10 days, doses of cc. 250-400/Hectolitre of water reducing, therefore, the administration of metal Copper of a least 90% (compared with Copper Oxichlorides and Sulphate) with far superior results.

The invention for which I request the European patent, is the result of a meticulous scientific research and of careful field testing carried out by a Researcher and Technician who has operated in the agricultural sector for over twenty years, this has allowed me to evaluate and confront the existing traditional methods, with this new plant nutrition technique, that at the same time increases the resistance to Fungus and Bacteria for a strong production of FITOALEXINE in the plants.

The GLUCONATES, allow us to administer nutrition via the leaves as well as via the roots, eliminating any loss of nutritional substance, as the plants adsorb them; they also allow us to eleminate the dangerous Nitrates (Studies carried out worldwide, show their unequivocal responsibility of substances with an oncological risk) and to administer to the plants a dose of components that they really need, in each phenological stage, without creating an exaggerated build up.

The formulation of all the GLUCONATES, needs as a base Gluconic Acid (Chemical Name: Acid D(-)-pentaidroxicaproic) C6H1207 which is commercialised, Gluconic Acid at 50% concentration. Gluconic Acid is a yellowish organic acid, with pH 1,8 Thickness 1,23-1,25 g/cm3, with a high biodegradable percentage (98% after 2 days).

To prepare the GLUCONATE, we must always use raw materials of the finest purity and thickness, to allow us to have a GLUCONATE which is stable and functional.

For example, if we want to prepare the COPPER GLUCONATE at 6% of Metal Copper, we must use a Copper Oxide (Oxidulo of Copper) at 75% of concentration, which will be slowly mixed in with the Gluconic Acid at 8%; the same rule applies if we want to produce other Gluconates, keeping in mind that the relationship between Gluconic Acid and Component that is going towards "Chelate" should never be below 60% for Gluconic Acid (50% concentration), that is 60 gr. of Gluconic Acid at 50% and 40 gr. of the component and/or nutritional mixture that is formed.

In preparing the GLUCONATE the mixtures have to be slowly applied and at room temperature of at least 15°C; when the products which should be added to the Gluconic Acid moves by about five grades, it is advisable that the mixing happens slowly and divided into 10/12 hours.

The GLUCONATES should always be left in a slow agitation, for about 6-12 hours, according to the product being used.

## Claims

1. Procedure to obtain the products called GLUCOLATES starting from Gluconic Acid mixed with nutritional components (Nitrogen, Phosphorus, Potassium, Calcium, Magnesium, Iron, Manganese, Boron, Molybdenum, Copper, Sodium, Zinc, Cobalt, Vanadium, Amino Acid, Algae, Vegetable Extracts, Phytoregulator etc.....) alone and/or mixed with each other.

2. Procedure according to claim 1 **characterised by** the fact that it consist in a slow mixing, for 6-12 hours, at room temperature of at lest 15°C, of Gluconic Acid with Nutritional Components and/or simple or complex substances, till we have a GLUCONATE ready to use.

3. Procedure consists in mixing Gluconic Acid Macro, Micro and Mesoelements, Phytoregulators, Vegetable and Animal Extracts or whatever other substance or mixture of these till we obtain a GLUCONATE for agricultural use.

4. The commercialisation and use of GLUCONATE in agriculture, gardening and other use for plant nutrition and defence.

5. Products including Gluconic Acid, with or without other active substance, for the nutrition and defence of vegetables, according to the previous claims as described above.
